Europäisches Patentamt

European Patent Office

Office européen des brevets

(11) Veröffentlichungsnummer: **0 514 564 A1**

## EUROPÄISCHE PATENTANMELDUNG

(21) Anmeldenummer: **91108169.3**

(22) Anmeldetag: **21.05.91**

(51) Int. Cl.5: **B23D 47/04**, B23Q 7/04

(43) Veröffentlichungstag der Anmeldung:
**25.11.92 Patentblatt 92/48**

(84) Benannte Vertragsstaaten:
**CH DE FR GB IT LI**

(71) Anmelder: **Gustav Wagner Maschinenfabrik GmbH & Co. KG
Opfersteinstrasse 11
W-7410 Reutlingen 1(DE)**

(72) Erfinder: **Eckhard, Conrad
Hans-Baltisberger-Strasse 9
W-7410 Reutlingen 11(DE)**

(74) Vertreter: **Popp, Eugen, Dr. et al
MEISSNER, BOLTE & PARTNER
Widenmayerstrasse 48 Postfach 86 06 24
W-8000 München 86(DE)**

(54) **Verfahren und Vorrichtung zum Vorschub stangenförmigen Werkstückmaterials bei einer Trennmaschine.**

(57) Verfahren zur Versorgung einer Trennmaschine, insbesondere Bügelsäge, Kaltkreissäge, Bandsäge, oder dgl., mit abzutrennendem Stangenmaterial, und zur Entsorgung abgetrennter Materialstücke, insbesondere Reststücke (13), wobei folgende Verfahrensschritte vorgesehen sind:
- Zufuhr von Stangenmaterial mittels an diesem angreifender Vorschubbacken (10) über die Trenn- bzw. Schnittebene (14) hinaus;
- Klemmhalterung des zugeführten Stangenmaterials mittels unmittelbar vor der Schnittebene (14) wirksamer Spannbacken (11) zur Durchführung eines Trennschnitts;
- Entsorgung des abgetrennten Materialstücks, insbesondere Reststücks (14) mittels von der

Abführseite her über die Schnittebene (14) hinwegfahrender Entsorgungsbacken (12), wobei nach Klemmung des abgetrennten Materialstücks, insbesondere Reststücks (14) dieses von den Spannbacken (11) freigegeben wird; und
- gegebenenfalls erneute Aktivierung der Vorschubbacken (10) für die Nachführung des bearbeiteten Stangenmaterials über die Schnittebene (14) hinaus, oder für die Zufuhr neuen Stangenmaterials.

Die Vorschubbacken (10) und Spannbacken (11) sind vor der Schnittebene (14) angeordnet, während die Entsorgungsbacken (12) hinter der Schnittebene liegen.

FIG.1

Die Erfindung betrifft ein Verfahren zur Versorgung einer Trennmaschine, insbesondere Bügelsäge, Kaltkreissäge, Bandsäge oder dgl., mit abzutrennendem Stangenmaterial, und zur Entsorgung abgetrennter Materialstücke, insbesondere auch Reststücke, sowie eine Vorrichtung zur Durchführung eines derartigen Verfahrens mit einem in Vorschubrichtung des Materials vor der Schnittebene unverschiebbar angeordneten, öffen- und schließbaren Paar von Spannbacken zur Halterung des auf einem Tisch der Trennmaschine aufliegenden Materials während des Schnitts, und mit einem in Materialvorschubrichtung verschiebbaren, öffen- und schließbaren Paar von Vorschubbacken, durch das unbearbeitetes Material neu ergreifbar und bei geöffneten Spannbacken über die Schnittebene hinweg vorschiebbar ist, sowie mit einem hinter der Schnittebene angeordneten, in Materialvorschubrichtung verschiebbaren, öffen- und schließbaren Paar von Entsorgungsbacken.

Eine Vorrichtung der genannten Art ist aus der DE-36 33 691 C1 bekannt. Dabei befinden sich die Entsorgungsbacken und Vorschubbacken innerhalb einer gemeinsamen Baueinheit hinter der Schnittebene, während die ortsfesten Spannbacken vor der Schnittebene angeordnet sind. Auf diese Weise soll nach einem Trennvorgang sofort vor der Entsorgung des abgeschnittenen Materialstückes der erneute Materialvorschub und der nächste Trennvorgang beginnen können. Des weiteren kann nach der anschließenden Fortschaffung des vorher abgeschnittenen Materialstückes das nächstfolgend abzuschneidende Materialstück erfaßt werden, bevor sein Abtrennen vollendet ist. Mit der bekannten Vorrichtung soll also eine Beeinträchtigung der Hauptarbeitszeit der Trennmaschine vermieden werden, wobei aber gleichzeitig die Funktionen der bekannten Vorrichtungen, z. B. nach der DE 28 16 497 C2 voll aufrechterhalten bleiben sollen.

Sowohl die Vorrichtung nach der DE 36 33 691 C1 als auch die Vorrichtung nach der DE 28 16 497 C2 arbeiten nach dem sogenannten "Zugzangen-Prinzip"; denn bei beiden Vorrichtungen sind die Vorschubbacken hinter der Schnittebene angeordnet. Die Folge davon ist, daß die Trennmaschine hinter der Schnittebene relativ viel Platz benötigt entsprechend dem langen Verschiebeweg der Vorschubbacken, ohne daß auf der Materialzufuhrseite Platz gespart würde; denn die Materialzufuhrseite ist ohnehin durch die Länge des abzutrennenden Stangenmaterials bestimmt. Des weiteren sind bei beiden bekannten Konstruktionen die Entsorgungsbacken mit den Vorschubbacken gekoppelt, wobei bei der Konstruktion nach der DE 28 16 497 C2 die Vorschubbacken gleichzeitig die Funktion der Entsorgungsbacken übernehmen, während bei der Konstruktion nach der DE 36 33 691 C1 die Entsorgungsbacken als Teil der Vorschubbacken mit diesen mitbewegbar sind. Die Entsorgung der abgetrennten Materialstücke erfolgt also immer gleichzeitig mit dem Vorschub des nächstfolgend abzuschneidenden Materialstücks, wobei keine besonderen Maßnahmen für eine optimale Reststück-Entfernung getroffen sind.

Das gleiche gilt für die Vorrichtung nach der DE 29 21 194 C2, bei der die ortsfesten Spannbacken hinter der Schnittebene und die Vorschubbacken vor der Schnittebene angeordnet sind. Um die Reststücklänge auf ein Minimum herabsetzen zu können, ist vorgeschlagen, daß die Vorschubbacken bis unmittelbar an die Schnittebene verfahrbar sein sollen. Damit verbleibt als nicht mehr verwertbare Reststücklänge des Materials nur noch die Länge, die minimal erforderlich ist, um das Material noch mit den Vorschubbacken sicher zu erfassen.

Die letztgenannte Konstruktion befaßt sich also mit der Reduzierung der Reststücklänge auf ein Minimum und der Entfernung der unvermeidbaren Reststücke.

Der vorliegenden Erfindung liegt nun die Aufgabe zugrunde, das gleiche Ziel bei einer Konstruktion zu erreichen, bei der die ortsfesten Spannbacken ebenfalls vor der Schnittebene liegen, während gesonderte Entsorgungsbacken hinter der Schnittebene angeordnet sind.

Diese Aufgabe wid verfahrensmäßig durch die kennzeichnenden Merkmale des Anspruches 1, und vorrichtungsmäßig durch die kennzeichnenden Merkmale des Anspruches 3 gelöst.

Erfindungsgemäß fällt nach dem letzten Trennschnitt ein Reststück minimaler Länge von z. B. nur 45 mm an. Die ortsfesten Spannbacken halten dieses Reststück gespannt. Die vor der Schnittebene angeordneten Vorschubbacken werden in eine Offenstellung gebracht und zur Abholung eines neuen Stangenmaterials zurückgefahren. Gleichzeitig oder anschließend werden die Entsorgungsbacken über die Schnittebene hinweg bis an die Spannbacken herangefahren und unter Klemmung des Reststücks in Schließstellung gebracht. Die ortsfesten Spannbacken werden daraufhin geöffnet. Die Entsorgungsbacken können nunmehr das Reststück in die Entsorgungsposition verfahren. Nach dem Entsorgen des Reststückes fahren die Entsorgungsbacken wieder in die Sägeposition zurück bis unmittelbar vor die Schnittebene. Sie können in dieser Stellung auch als hinter der Schnittebene wirksame Spannbacken eingesetzt werden, so daß das abzutrennende Materialstück an beiden Seiten der Schnittebene fest eingespannt ist. Andererseits ist es jedoch auch denkbar, daß die Entsorgungsbacken nur dann wieder bis unmittelbar an die Schnittebene zurückgefahren werden, wenn durch einen gesonderten Sensor das nächste Reststück gemeldet wird.

Durch die über die Schnittebene hinwegverfahrbaren Entsorgungsbacken entfällt das bisherige Problem bei der hier fraglichen Maschinenkonstruktion, nämlich ein kurzes Reststück über den Schnittspalt zu transportieren; denn die Entsorgungsbacken ergreifen das Reststück von der Abfuhrseite her auf der Materialzufuhrseite nach Art des eingangs erwähnten Zugstangen-Prinzips. Damit bleibt das Reststück in jeder Phase der Entsorgung gespannt, und zwar entweder durch die vor der Schnittebene angeordneten Spannbacken oder durch die über die Schnittebene hinweg verfahrbaren Entsorgungsbacken. Das Reststück kann auf diese Weise nicht in den Schnittspalt fallen bzw. in diesen nach Öffnung der Spannbacken und auch Vorschubbacken abkippen und den Materialvorschub blockieren. Dabei muß bedacht werden, daß der Schnittspalt bei den Trennmaschinen der hier fraglichen Art zwischen etwa 10 bis 20 mm beträgt.

Aufgrund der Tatsache, daß das Reststück immer gespannt bleibt, ist die Entsorgung sowohl von Profil-Reststücken als auch von zwei Reststangen gleichzeitig beim "Zwei-Stangensägen" sichergestellt.

Die Entsorgung des Reststückes geht auch nicht in die Taktzeit der Maschine ein, da sie während der Zuführung der nächsten Materialstange erfolgt. Insofern ist mit der erfindungsgemäßen Lösung auch der eingangs im Zusammenhang mit der Konstruktion nach der DE 36 33 691 C1 genannte Vorteil gegeben.

Durch die erfindungsgemäße Konstruktion ist schließlich auch noch sichergestellt, daß jedes Reststück in dieselbe Position entsorgt wird, was für die Verkettung mit nachfolgenden Einrichtungen äußerst vorteilhaft ist.

Für die Minimierung der Reststücklänge sind vorrichtungstechnisch noch hervorzuheben die Maßnahmen nach Anspruch 6.

Nachstehend wird die Erfindung anhand eines in der anliegenden Zeichnung schematisch dargestellten Ausführungsbeispieles näher erläutert. Es Zeigen:

Fig. 1  die Anordnung von Entsorgungsbakken, Vorschubbacken und Spannbakken relativ zur Schnittebene eines Kreissägeblatts, wobei durch die Spannbacken und Vorschubbacken noch ein Reststück gehalten ist, und zwar in schematischem Längsschnitt; und

Fig. 2  die Entsorgungsbacken in Reststück-Abholstellung, ebenfalls im schematischen Längsschnitt.

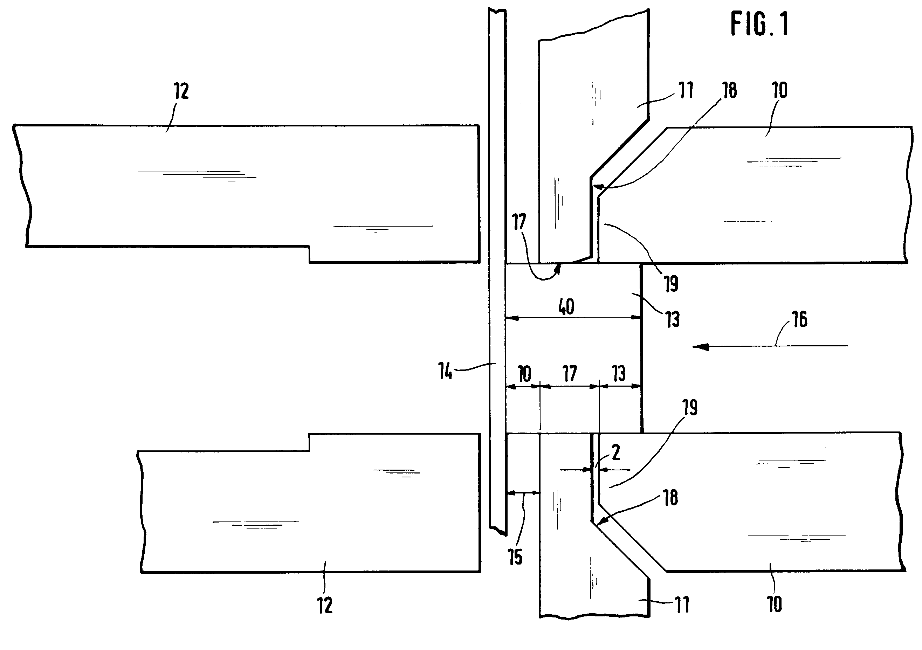

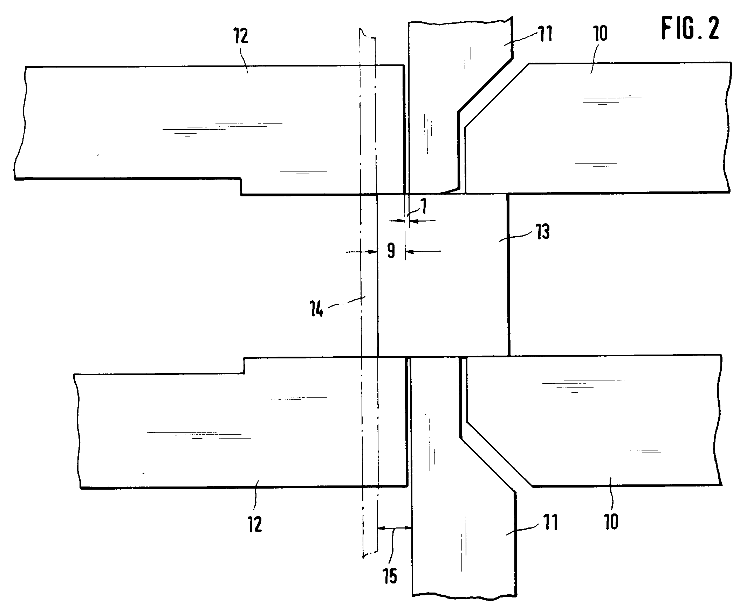

In den Fig. 1 und 2 ist im schematischen Längsschnitt die Anordnung von Versorgungsbakken 10, Spannbacken 11 und Entsorgungsbacken 12 relativ zu einer durch ein Sägeblatt einer Kaltkreissäge definierten Schnittebene 14 innerhalb einer Trennmaschine, nämlich wie hier Kaltkreissäge, dargestellt. Durch die vorgenannten Backen wird eine Vorrichtung zur Versorgung einer Trennmaschine, wie Kaltkreissäge, mit Stangenmaterial und zur Entsorgung abgetrennter Materialstücke, insbesondere Reststücke 13, definiert. Diese Vorrichtung ist mit einem in Vorschubrichtung 16 des Materials vor der Schnittebene 14 unverschiebbar angeordneten, öffen- und schließbaren Paar von Spannbakken 11 zur Halterung des auf einem nicht näher dargestellten Tisch der Trennmaschine aufliegenden Materials während des Schnitts, und mit einem in Materialvorschubrichtung (16) verschiebbaren, öffen- und schließbaren Paar von Vorschubbacken (10) versehen, durch das unbearbeitetes Material neu ergreifbar und bei geöffneten Spannbacken 11 über die Schnittebene 14 hinweg vorschiebbar ist. Sowohl die Spannbacken 11 als auch die Vorschubbacken 10 sind in Materialvorschubrichtung vor der Schnittebene 14 angeordnet.

Hinter der Schnittebene 14 befindet sich ein in Materialvorschubrichtung verschiebbares, öffen- und schließbares Paar von Entsorgungsbacken 12. Die Entsorgungsbacken 12 sind zum Zwecke der Entsorgung, insbesondere zur Entfernung von Reststücken 13 minimaler Länge, z. B. 40 mm, über die Schnittebene 14 hinaus bis unmittelbar vor die Spannbacken 11 fahrbar. Vorzugsweise sind die Entsorgungsbacken 12 bis auf etwa 0,5 bis 2,0 mm, insbesondere etwa 1,0 mm Abstand von den Spannbacken 11 an diese heranbewegbar, sowie dies in Fig. 2 dargestellt ist.

Der Abstand der Spannbacken 11 von der Schnittebene 14 beträgt bei dem dargestellten Ausführungsbeispiel etwa 8 bis 12 mm, insbesondere etwa 10 mm. Dieser Abstand definiert die Breite des Schnittspaltes 15. Über diesen Schnittspalt 15 hinweg muß das Reststück 13 ohne Verkanten innerhalb des Schnittspaltes zur Entsorgung hinwegbewegt werden. Um dies zu gewährleisten, werden die Entsorgungsbacken 12 über die Schnittebene hinweg bis an die Spannbacken 11 herangefahren. Das Reststück 13 wird von den Spannbacken 11 erst dann freigegeben, wenn es von den Entsorgungsbacken 12 ergriffen ist. Auf diese Weise ist das Reststück 13 in jeder Phase der Entsorgung gespannt. Es besteht nicht mehr die Gefahr, daß das Reststück 13 beim Vorschub durch neues Stangenmaterial in den Schnittspalt 15 kippt und den Materialvorschub blockiert.

Bei dem dargestellten Ausführungsbeispiel beträgt die Länge des Reststückes 13 40 mm. Der Schnittspalt 15 hat eine Breite von 10 mm, wobei der Schnittspalt 15 definiert ist durch den Abstand zwischen der dem Sägeblatt bzw. der Schnittebene 14 zugewandten Seite der Spannbacken 11 und dem Sägeblatt. Die wirksame Klemmfläche der Vorschubbacken 10 am Reststück 13 beträgt bei dem dargestellten Ausführungsbeispiel 13 mm.

Zur Reduzierung der Reststücklänge trägt auch noch bei das Konstruktionsmerkmal, wonach die Spannbacken 11 werkstückseitig an der der Schnittebene 14 abgewandten Seite eines sich jeweils bis zur Spannfläche 17 hin erstreckende Ausnehmung 18 aufweisen, in die ein entsprechend bzw. korrespondierend vorspringender Abschnitt 19 der Vorschubbacken 10 hineinverfahrbar ist. Auf diese Weise wird die gesamte Backenkonstruktion auf der Seite vor der Schnittebene 14 zu dieser hin verschoben. Die Reststücklänge läßt sich dadurch zusätzlich erheblich reduzieren.

Die beschriebene Konstruktion und das beschriebene Verfahren lassen sich auch bei herkömmlichen Sägemaschinen nachträglich verwirklichen, und zwar ohne großen Aufwand. Lediglich die Verfahrwege der einzelnen Backen müssen geändert und wie beschrieben aufeinander abgestimmt werden. Auch die Änderung der Spannbacken- und Vorschubbackenkonstruktion läßt sich bei Bedarf einfach verwirklichen.

Sämtliche in den Anmeldungsunterlagen offenbarten Merkmale werden als erfindungswesentlich beansprucht, soweit sie einzeln oder in Kombination gegenüber dem Stand der Technik neu sind.

**Patentansprüche**

1. Verfahren zur Versorgung einer Trennmaschine, insbesondere Bügelsäge, Kaltkreissäge, Bandsäge, oder dgl., mit abzutrennendem Stangenmaterial, und zur Entsorgung abgetrennter Materialstücke, insbesondere Reststücke (14),
   **gekennzeichnet durch** folgende Verfahrensschritte:
   a) Zufuhr von Stangenmaterial mittels an diesem angreifender Vorschubbacken (10) über die Trenn- bzw. Schnittebene (14) hinaus;
   b) Klemmhalterung des zugeführten Stangenmaterials mittels unmittelbar vor der Schnittebene (14) wirksamer Spannbacken (11) zur Durchführung eines Trennschnitts;
   c) Entsorgung des abgetrennten Materialstücks, insbesondere Reststücks (14), mittels von der Materialabführseite her über die Schnittebene (14) hinwegbewegbarer Entsorgungsbacken (12), wobei nach Klemmung des abgetrennten Materialstücks dieses von den Spannbacken (11) freigegeben wird; und
   d) gegebenenfalls erneute Aktivierung der Vorschubbacken (10) für die Nachführung des soeben bearbeiteten Stangenmaterials über die Schnittebene (14) hinaus, oder für die Zufuhr neuen Stangenmaterials gemäß Schritt a).

2. Verfahren nach Anspruch 1,
   **dadurch gekennzeichnet**, daß die Entsorgungsbacken (12) um etwa 5 bis 15 mm, insbesondere etwa 9 mm über die Schnittebene (14) hinweg bewegbar sind.

3. Vorrichtung zur Versorgung einer Trennmaschine, insbesondere Bügelsäge, Kaltkreissäge, Bandsäge, oder dgl., mit Stangenmaterial, und zur Entsorgung abgetrennter Materialstücke, insbesondere Reststücke (13), mit einem in Vorschubrichtung (16) des Materials vor der Schnittebene (14) unverschiebbar angeordneten, öffen- und schließbaren Paar von Spannbacken (11) zur Halterung des auf einem Tisch der Trennmaschine aufliegenden Materials während des Schnitts, und mit einem in Materialvorschubrichtung (16) verschiebbaren, öffen- und schließbaren Paar von Vorschubbacken (10), durch das unbearbeitetes Material neu ergreifbar und bei geöffneten Spannbacken (11) über die Schnittebene (14) hinweg vorschiebbar ist, sowie mit einem hinter der Schnittebene (14) angeordneten, in Materialvorschubrichtung (16) verschiebbaren, öffen- und schließbaren Paar von Entsorgungsbacken (12),
   **dadurch gekennzeichnet**, daß
   - die Vorschubbacken (10) vor der Schnittebene angeordnet und wirksam sind, und daß
   - die Entsorgungsbacken (12) zum Zwecke der Entsorgung, insbesondere zur Entfernung von Reststücken (13), über die Schnittebene (14) hinaus bis unmittelbar vor die Spannbacken (11) bewegbar sind.

4. Vorrichtung nach Anspruch 3,
   **dadurch gekennzeichnet**, daß die Entsorgungsbacken (12) bis auf etwa 0,5 - 2,0 mm, insbesondere etwa 1,0 mm Abstand von den Spannbacken (11) an diese heran bewegbar sind.

5. Vorrichtung nach Anspruch 3 oder 4,
   **dadurch gekennzeichnet**, daß der Abstand der Spannbacken (11) von der Schnittebene (14) etwa 8 - 12 mm, insbesondere etwa 10 mm, beträgt.

6. Vorrichtung nach einem der Ansprüche 3 bis 5,
   **dadurch gekennzeichnet**, daß die Spannbacken (11) werkstückseitig an der der Schnittebene (14) abgewandten Seite eine sich jeweils bis zur Spannfläche (17) hin erstreckende Ausnehmung (18) aufweisen, in die ein entsprechend vorspringender Abschnitt (19) der Vorschubbacken (10) hineinfahrbar ist.

FIG.1

EP 0 514 564 A1

FIG. 2

EP 0 514 564 A1

Europäisches
Patentamt

**EUROPÄISCHER RECHERCHENBERICHT**

Nummer der Anmeldung

EP    91 10 8169

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN vol. 10, no. 187 (M-493)(2243) 02 Juli 1986, & JP-A-61 30316 (DAITO SEIKI K.K.) 12 Februar 1986, * das ganze Dokument * --- | 1-5 | B23D47/04 B23Q7/04 |
| X | DE-U-8914110 (WEGOMA GMBH) * Seite 5, Zeile 1 - Seite 6, Zeile 18; Figuren 1-4 * --- | 1, 3 | |
| A | GB-A-2200320 (KEURO MASCHINENBAU) * Zusammenfassung; Figuren 5-32 * --- | 1-6 | |
| A,D | DE-C-2921194 (KEURO MASCHINENBAU GMBH & CO KG) * Anspruch 1; Figuren 2-4 * --- | 1, 3-5 | |
| A,D | DE-C-3633691 (KEURO MASCHINENBAU GMBH & CO KG) * Zusammenfassung; Figuren 2-7 * ----- | 1-6 | |
| | | | **RECHERCHIERTE SACHGEBIETE (Int. Cl.5)** B23D B23Q |

Der vorliegende Recherchenbericht wurde für alle Patentansprüche erstellt

| Recherchenort | Abschlußdatum der Recherche | Prüfer |
|---|---|---|
| BERLIN | 07 JANUAR 1992 | CUNY J. |